# EUROPÄISCHE PATENTANMELDUNG

(11) **EP 1 168 753 A1**
(43) Veröffentlichungstag der Anmeldung: **02.01.2002**
(21) Anmeldenummer: 00440190.7
(22) Anmeldetag: 26.06.2000
(51) Int. Cl.: H04L 29/06

(54) **Verfahren und Mittel zur Übertragung von Daten unterschiedlicher Dienstqualität in Internet-Protokoll Datagrammen**

(71) Anmelder: ALCATEL, 75008 Paris (FR)
(72) Erfinder: Emanuel, Frank, 70193 Stuttgart (DE); Barth, Ulrich, 70825 Münchingen (DE)
(74) Vertreter: Rausch, Gabriele, Dr.

(57) **Zusammenfassung**

Die vorliegende Erfindung betrifft eine Verfahren zur Übertragung von Daten (RBP1 bis RSP2) unterschiedlicher Dienstqualität in Internet-Protokoll-Datagrammen, ein Vorbereitungsmodul (SM) hierfür, ein Empfangsmodul (RM) hierfür sowie jeweils damit ausgestattete Übertragungseinrichtungen (NB3, RNC2).

Bei dem Verfahren werden die Daten entsprechend ihrer jeweiligen Dienstqualität klassifiziert in Warteschlangen (QC, QS, Ql, QB) eingereiht, die der jeweiligen Dienstqualität zugeordnet sind. Die Daten werden in Datenpakete (RBP11, CP1,..., SP14) verpackt, wobei die Daten jeweils in Abhängigkeit von einer der jeweiligen Dienstqualität zugeordneten Segmentierungsregel segmentiert werden und wobei jedem Datenpaket eine Datenpaket-Steuerinformation (PH) zugeordnet wird, anhand derer in den Datenpaketen enthaltene Daten (RBP1, RSP1) rekonstruiert werden können. In Abhängigkeit von einer Aggregationsregel werden Container (C1, C2) einer vorbestimmten Nutzlast-Menge mit Datenpaketen und deren jeweils zugeordneter Datenpaket-Steuerinformation (PH) gebildet, wobei in zumindest einem Teil der Datenpakete mit Daten unterschiedlicher Dienstqualität kombiniert werden und wobei die Aggregationsregel vorschreibt, nach welcher Prioritätsregel Datenpakete unterschiedlicher Dienstqualität aus den Warteschlangen entnommen werden. Ein Container wird zur Übertragung in einem Internet-Protokoll-Datagramm bereitgestellt.

## Beschreibung

Die vorliegende Erfindung betrifft eine Verfahren zur Übertragung von Daten unterschiedlicher Dienstqualität in Internet-Protokoll-Datagrammen, ein Vorbereitungsmodul hierfür, ein Empfangsmodul hierfür sowie jeweils damit ausgestattete Übertragungseinrichtungen.

Zur Übertragung von Daten wird in zunehmendem Maße das Internet-Protokoll eingesetzt. Dabei werden unterschiedlich hohe Anforderungen an die bei der Übertragung der Daten jeweils notwendige Dienstqualität (engl.: Quality of Service = QoS) gestellt. Beispielsweise müssen Sprachdaten auf einer Gesprächsverbindung in Echtzeit übertragen werden, während z.B. über das Internet auf ein Endgerät zu ladende Download-Daten, beispielsweise Programm-Dateien, durchaus verzögert und mit Übertragungsunterbrechungen übertragen werden können. Allerdings handelt es sich bei Download-Daten oft um größerer Datenmengen, die bei Nutzung des Internet-Protokolls, das größenvariable Datagramme ermöglicht, in entsprechend großen Internet-Protokoll-Datagrammen versendet werden. Werden andererseits Sprachdaten mit Hilfe des Internet-Protokolls versendet, können entsprechend kleinere Internet-Protokoll-Datagramme gebildet werden, die jedoch im Vergleich zu Datagrammen mit Download-Daten häufiger und gegebenenfalls auch in regelmäßigen Intervallen zu versenden sind.

Sollen auf einem Übertragungsweg, der eine begrenzte Übertragungsbandbreite aufweist, Daten unterschiedlicher Dienstqualität, beispielsweise die erwähnten Sprachdaten und Download-Daten, gemeinsam übertragen werden, kommt es zu verzögerter Übertragung von Daten hoher Dienstqualität (z.B. Sprachdaten), weil der Übertragungsweg zeitweise durch Internet-Protokoll-Datagramme mit Daten niederer Dienstqualität blockiert wird, wobei diese Datagramme zudem meist besonders groß sind. Beim vergleichsweise dynamischen Internet-Protokoll können nämlich auch große Datenmengen in einem Datagramm transportiert werden, im Gegensatz zu beispielsweise der ATM-Technologie (ATM = Asynchronous Transfer Mode), bei der Daten aufgrund der dort vorhandenen festen und relativ kleinen Zellengröße üblicherweise auf mehrere Zellen aufgeteilt werden müssen.

Die obengenannte Situation tritt allgemein bei einer Übertragung auf Basis des Internet-Protokolls auf, insbesondere jedoch bei Zugangsnetzen, insbesondere bei Mobilfunk-Zugangsnetzen. Dort sind Daten zwischen Zugangseinrichtungen, an die die Endgeräte der Teilnehmer angeschlossen sind, und Konzentrationsknoten, die die Zugangseinrichtungen bedienen, zu übertragen. Im Falle des Universal Mobile Telecommunications Systems (UMTS) wird eine Zugangseinrichtung als Node B bezeichnet, ein Konzentrationsknoten, an den mehrere Nodes B angeschlossen sind, als Radio Network Controller (RNC). Zwischen den Nodes B und dem RNC sind Daten zu übertragen, die an ein mit dem jeweiligen Node B in Verbindung stehenden, als User Equipment bezeichneten Endgerät zu senden sind oder die von dem Endgerät an den RNC übertragen werden sollen. Ferner kommunizieren RNCs untereinander solche Daten. Die jeweiligen Daten betreffen unterschiedliche Transportkanäle, beispielsweise einen sogenannten Dedicated Traffic Channel (DTCH) oder einen Random Access Channel (RACH). Dabei sind die Transportkanäle an sich schon unterschiedlichen Dienstqualitäten zugeordnet. Jedoch werden Daten unterschiedlicher Dienstqualität, beispielsweise Sprach- und Download-Daten, auch auf einem Transportkanal gemeinsam transportiert.

Aufgrund der obengenannten Probleme mit teilweise verzögerter Übertragung von Daten hoher Dienstqualität eignet sich eine Übertragung auf Basis des Internet-Protokolls bislang für Zugangsnetze, insbesondere für Mobilfunk-Zugangsnetze, nicht.

Es ist daher Aufgabe der vorliegenden Erfindung, eine Übertragung von Daten unterschiedlicher Dienstqualität in Internet-Protokoll-Datagrammen bereitzustellen, die hinsichtlich der jeweiligen Dienstqualität der zu übertragenden Daten optimiert ist.

Zur Lösung der Aufgabe ist ein Verfahren gemäß der technischen Lehre des Anspruchs 1 vorgesehen. Zur Lösung der Aufgabe sind ferner vorgesehen: ein Vorbereitungsmodul gemäß der technischen Lehre des Anspruchs 10, ein Empfangsmodul gemäß der technischen Lehre des Anspruchs 12 sowie eine Übertragungseinrichtung gemäß der technischen Lehre des Anspruchs 14, die mit einem Vorbereitungsmodul gemäß der technischen Lehre des Anspruchs 10 und/oder mit einem Empfangsmodul gemäß der technischen Lehre des Anspruchs 12 ausgestattet ist.

Der Erfindung liegt dabei der Gedanke zugrunde, dass beispielsweise durch ein erfindungsgemäßes Vorbereitungsmodul die zu übertragenden Daten entsprechend ihrer jeweiligen Dienstqualität klassifiziert in Warteschlangen eingereiht werden, die der jeweiligen Dienstqualität zugeordnet sind. Ferner werden die Daten in Datenpakete verpackt, wobei die Daten zumindest teilweise jeweils in Abhängigkeit von zumindest einer der jeweiligen Dienstqualität zugeordneten Segmentierungsregel segmentiert werden und wobei jedem Datenpaket eine Datenpaket-Steuerinformation zugeordnet wird, anhand derer in einzelnen Datenpaketen oder in Datenpaketen einer Datenpaket-Sequenz enthaltene Daten rekonstruiert werden können. Dabei werden größere Dateneinheiten, beispielsweise Download-Daten, in kleinere Datenpakete segmentiert, während kleinere Dateneinheiten, beispielsweise Sprachdaten oder kleine Dateien, unsegmentiert in Datenpakete gepackt werden. Diese Datenpakete werden aus den jeweiligen Warteschlangen entnommen, wobei mindestens eine Aggregationsregel vorschreibt, nach welcher Prioritätsregel Datenpakete unterschiedlicher Dienstqualität aus den jeweiligen Warteschlangen zu entnehmen sind. Beispielsweise werden Datenpakete mit Sprachdaten mit hoher Priorität behandelt, während Datenpakete mit Download-Daten mit niedriger Priorität entnommen werden. Eine Anzahl entnommener Datenpakete wird jeweils zu einem Container gruppiert, wobei in zumindest einem Teil der Container pro Container Datenpakete mit Daten unterschiedlicher Dienstqualität kombiniert werden. Die Container weisen eine vorbestimmte Nutzlast-Menge auf. Dabei wird ein Container vorzugsweise zunächst mit Datenpaketen mit Daten hoher Dienstqualität gefüllt und der noch verbleibende Container-Platz bis zum Erreichen der Nutzlast-Menge wird mit Datenpaketen mit Daten niedriger Dienstqualität aufgefüllt. Abschließend wird jeweils ein Container zur Übertragung in jeweils einem Internet-Protokoll-Datagramm bereitgestellt.

Dabei ist es vorteilhaft, vorzugsweise Daten mit niedriger Dienstqualität zu segmentieren, so dass zusammen mit bevorzugt zu übertragenden Daten hoher Dienstqualität auch Daten mit niedriger Dienstqualität in jeweils verhältnismäßig kleinen Datenpaketen mitübertragen werden.

Jedenfalls wird erreicht, dass einerseits Daten hoher Dienstqualität mit einer ihrer Dienstqualität entsprechenden hohen zeitlichen Zuverlässigkeit, andererseits jedoch auch Daten niedrigerer Dienstqualität bestmöglich übertragen werden. Daten niedriger Dienstqualität blockieren somit einerseits nicht Übertragungswege und stauen sich andererseits wegen bevorzugt zu übertragenden Daten hoher Dienstqualität nicht auf. Dabei wird eine jeweils zur Verfügung stehende Übertragungskapazität optimal ausgenutzt, da die jeweilige Nutzlast eines Internet-Protokoll-Datagramms in einem günstigen Verhältnis zu dessen durch das Internet-Protokoll bedingten Steuerinformationen steht. Somit können insbesondere auch Übertragungswege mit relativ niedriger Übertragungskapazität optimal genutzt werden.

Im vorliegenden Zusammenhang ist der Begriff "Container" als ein veranschaulichender Begriff für eine Gruppierung von Datenpaketen zu verstehen, die in einem Internet-Protokoll-Datagramm versendet werden.

Weitere vorteilhafte Ausgestaltungen der Erfindung ergeben sich aus den abhängigen Ansprüchen.

Nach der Übertragung der jeweiligen Internet-Protokoll-Datagramme an deren vorgesehenes Ziel, beispielsweise an eine Zugangseinrichtung oder einen Konzentrationsknoten eines (Mobilfunk-) Zugangsnetzes, entnehmen Rekonstruktionsmittel die jeweils in den Containern der Internet-Protokoll-Datagramme enthaltenen Datenpakete und leiten die darin enthaltenden Daten entsprechend ihrer jeweiligen Dienstqualität an das für die jeweiligen Daten vorgesehene Ziel weiter, wobei die Rekonstruktionsmittel in einer Datenpaket-Sequenz übertragene segmentierte Daten erst dann weiterleiten, wenn sie die Daten anhand der den jeweiligen Datenpaketen jeweils zugeordneten Datenpaket-Steuerinformation rekonstruiert haben. Somit sind segmentierte sowie auch unsegmentierte Daten wieder in ihrem ursprünglichen Zustand verfügbar.

In die Internet-Protokoll-Datagramme wird zweckmäßigerweise auf die Internet-Protokoll-Schicht eine User-Datagram-Protokoll-Schicht (UDP) eingetragen. Die Internet-Protokoll-Datagramme werden dann auf der Basis des User-Datagram-Protokolls versendet. Das User-Datagram-Protokoll bietet unter anderem eine byte-orientierte Anwendungsschicht und zudem mit seinen sogenannten UDP-Ports eine weitere Adressierungsebene. Ferner wird durch das User-Datagram-Protokoll beispielsweise eine effiziente Flusskontrolle über erfolgreich oder nicht erfolgreich übertragene Internet-Protokoll-Datagramme in der Anwendungsschicht ermöglicht. Grundsätzlich sind jedoch auch andere Protokolle anwendbar, beispielsweise das Transmission Control Protocol (TCP).

Ein Container bildet jeweils vorteilhafterweise die auf der User-Datagram-Protokoll-Schicht transportierte Nutzlast.

In einer vorteilhaften Variante der Erfindung wird ein Container, der zumindest ein Datenpaket enthält, bei Erreichen einer vorbestimmten Zeitgrenze versendet, auch wenn der jeweilige Container noch nicht bis zu seiner vorbestimmten Nutzlast-Menge mit Datenpaketen gefüllt ist. Enthält das jeweilige Datenpaket beispielsweise Sprachdaten einer Gesprächsverbindung, wird auf diese Weise ein rechtzeitiger Versand ermöglicht.

Kombinationen der oben beschriebenen Varianten sowie weiterer, in den abhängigen Ansprüchen genannter Lösungen sind ohne Weiteres möglich.

Weitere vorteilhafte Weiterbildungen und Ausgestaltungen der Erfindung ergeben sich aus den abhängigen Ansprüchen sowie aus der Beschreibung.

Im Folgenden werden die Erfindung und ihre Vorteile anhand eines Ausführungsbeispiels unter Zuhilfenahme der Zeichnung dargestellt.
- Figur 1: zeigt eine Anordnung zur Ausführung des erfindungsgemäßen Verfahrens mit Endgeräten UE1 und UE2, Zugangseinrichtungen NB1, NB2 und NB3, Konzentrationsknoten RNC1 und RNC2 sowie Schnittstellenknoten ER1, ER2, ER 3, ER1C und ER2C eines Zugangsnetzes ACCNET.
- Figur 2: zeigt eine funktionale Ansicht der Zugangseinrichtung NB1.
- Figur 3: zeigt einen schematischen Aufbau eines erfindungsgemäßen Vorbereitungsmoduls SM.
- Figur 4: zeigt einen schematischen Aufbau eines erfindungsgemäßen Empfangsmoduls RM.
- Figur 5: veranschaulicht eine Ausführung des erfindungsgemäßen Verfahrens.
- Figur 6: veranschaulicht eine Fortsetzung des Verfahrens aus Figur 5.
- Figur 7a: zeigt ein Ausführungsbeispiel eines Containers C1a.
- Figur 7b: zeigt ein Ausführungsbeispiel eines Containers C1b.
- Figur 7c: zeigt ein Ausführungsbeispiel eines Containers C1c.
- Figur 8: zeigt eine funktionale Ansicht des Konzentrationsknotens RNC2.

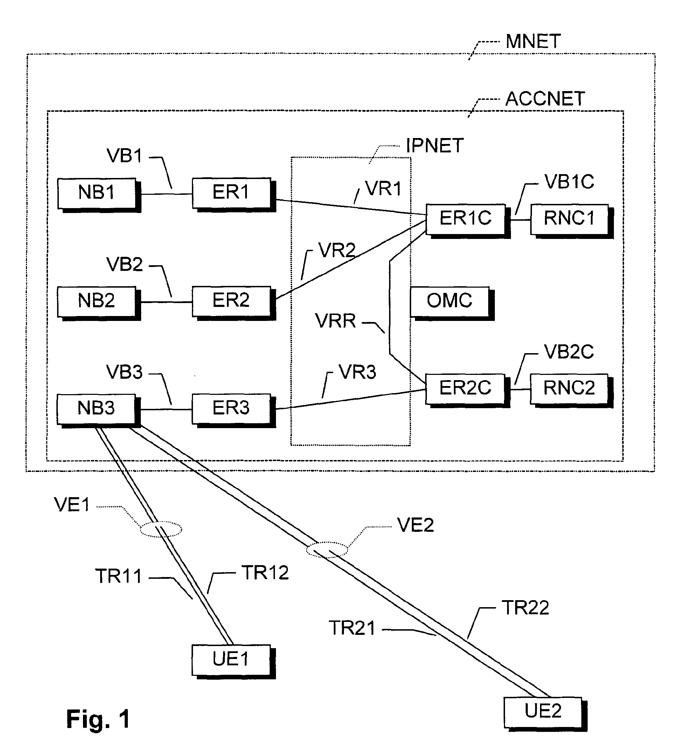

Figur 1 zeigt stark schematisch ein Zugangsnetz ACCNET eines Mobilfunk-Netzwerkes MNET, das Endgeräte UE1 und UE2 sowie weitere, nicht gezeigte Endgeräte mit Mobilfunk-Diensten versorgt. Bei dem Mobilfunk-Netzwerkes MNET handelt es sich vorliegend um ein UMTS-Mobilfunk-Netz (UMTS = Universal Mobile Telecommunications System); das Zugangsnetz ACCNET wird daher vorliegend als UTRAN (= UMTS Terrestrial Radio Access Network) bezeichnet. Von dem Zugangsnetz ACCNET sind als Übertragungseinrichtungen Zugangseinrichtungen NB1, NB2 und NB3 gezeigt, bei denen es sich vorliegend um sogenannte Nodes B handelt, sowie Konzentrationsknoten RNC1 und RNC2, die vorliegend sogenannte Radio Network Controller (RNC) sind. Die Zugangseinrichtungen NB1, NB2 und NB3 sind mit den Konzentrationsknoten RNC1 und RNC2 über ein Netzwerk IPNET verbunden, auf dem mit Hilfe des Internet-Protokolls Daten übertragen werden. Über eine sogenannte lub-Schnittstelle steuert der Konzentrationsknoten RNC1 die Zugangseinrichtungen NB1 und NB2, der Konzentrationsknoten RNC2 die Zugangseinrichtung NB3 sowie weitere, nicht gezeigte Zugangseinrichtungen. Die Konzentrationsknoten RNC1 und RNC2 sind mit nicht gezeigten Einrichtungen des Mobilfunk-Netzwerkes MNET, beispielsweise mit Vermittlungsstellen, Routern, weiteren Konzentrationsknoten oder dergleichen verbunden. Die Konzentrationsknoten RNC1 und RNC2 kommunizieren über eine sogenannte lur-Schnittstelle miteinander. Die lub-Schnittstelle und die lur-Schnittstelle entsprechen im Ausführungsbeispiel den Spezifikationen der 3rd Generation Partnership Project (3GPP).

Die Schnittstellenfunktion zu dem Netzwerk IPNET erfüllen vorliegend Schnittstellenknoten ER1, ER2, ER3 für die Zugangseinrichtungen NB1, NB2 bzw. NB3 sowie Schnittstellenknoten ER1C und ER2C für die Konzentrationsknoten RNC1 bzw. RNC2. Bei den Schnittstellenknoten ER1, ER2, ER 3, ER1C und ER2C handelt es sich vorliegend um sogenannte Edge-Router.

Die Zugangseinrichtung NB3 ist über eine Verbindung VB3 mit dem Schnittstellenknoten ER3 verbunden. Gleichermaßen sind die Zugangseinrichtungen NB1 und NB2 über Verbindungen VB1 bzw. VB2 mit den Schnittstellenknoten ER1 bzw. ER2 verbunden sowie die Konzentrationsknoten RNC1 und RNC2 über Verbindungen VB1C bzw. VB2C mit den Schnittstellenknoten ER1C bzw. ER2C. Die Verbindungen VB1, VB2, VB3, VB1C und VB2C sind Verbindungen mit einer begrenzten Übertragungskapazität. Diese ist insbesondere bei den Verbindungen VB1, VB2 und VB3 verhältnismäßig gering. Die Verbindungen VB1, VB2 und VB3 sind beispielsweise Verbindungen mit 2,048 Megabit pro Sekunde nach der europäischen E1-Spezifikation oder mit 1,544 Megabit pro Sekunde nach der in den USA üblichen T1-Spezifikation. Höhere Bitraten können jedoch ebenfalls vorgesehen sein.

Zwischen den Schnittstellenknoten ER1 und ER1C, den Schnittstellenknoten ER2 und ER1C sowie den Schnittstellenknoten ER3 und ER2C bestehen Verbindungen VR1, VR2 bzw. VR3 über das Netzwerk IPNET. Ferner sind die Schnittstellenknoten ER1C und ER2C über eine Verbindung VRR miteinander verbunden, über die die Konzentrationsknoten RNC1 und RNC2 miteinander kommunizieren können. Je nach Art des Netzwerkes IPNET sind die Verbindungen VR1, VR2, VR3 und VRR z.B. logische Verbindungen, die über verschiedene, auch wechselnde Verbindungswege und Knoten, beispielsweise Router, des Netzwerkes IPNET führen können oder aber über feste, beispielsweise geschaltete Verbindungen.

Bei dem Netzwerk IPNET handelt es sich beispielsweise um ein sogenanntes IP-Backbone-Netz, auf dem z.B. auch ein Virtuelles Privates IP Netzwerk zwischen den Schnittstellenknoten ER1, ER2, ER 3, ER1C und ER2C aufgebaut werden kann. Das Netzwerk IPNET kann ein privates IP-Backbone-Netz sein, das dediziert für das Zugangsnetz ACCNET verfügbar ist, oder aber ein IP-Backbone-Netz eines Service Providers, auf dem auch anderer Datenverkehr transportiert wird als der des Zugangsnetzes ACCNET. Jedenfalls ist das Netzwerk IPNET vorzugsweise ein Netzwerk, das definierte Dienstqualitäten (Quality of Service = QoS) bei der Übertragung zur Verfügung stellt und Sicherheit gegen unbefugten Zugriff auf die auf dem Netzwerk übertragenen Daten garantiert. Daher werden aus Sicherheitsgründen in einem solchen Fall zwischen den Schnittstellenknoten ER1, ER2, ER3, ER1C und ER2C sogenannte Tunnel-Verbindungen aufgebaut, auf denen über Tunnel-Protokolle kommuniziert wird, beispielsweise über das sogenannte IPSecure-Protokoll (IPSec).

In einer weiteren vorteilhaften Lösung ist das Netzwerk IPNET ein sogenanntes Label Switching-Netzwerk, beispielsweise ein Multiprotocol Label Switching (MPLS) Netzwerk, wobei die Verbindungen VR1, VR2, VR3 und VRR dann über sogenannte Label Switching-Tunnel bzw. MPLS-Tunnel führen.

Die Endgeräte UE1 und UE2, die vorliegend als User Equipment bezeichnet werden, sind über drahtlose Verbindungen VE1 bzw. VE2 mit der Zugangseinrichtung NB3 verbunden. Von den Verbindungen VE1, VE2 sind beispielhaft Funk-Transportkanäle TR11, TR12 bzw. TR21, TR22 gezeigt. Bei den Transportkanälen TR11 und TR21 handelt es sich jeweils um einen oder mehrere Dedicated Channels (DCH), bei den Transportkanälen TR12 und TR22 jeweils um einen oder mehrere Random Access Channels (RACH). Weitere Transportkanäle und Kontrollkanäle der Verbindungen VE1, VE2, beispielsweise Forward Link Access Channel (FACH) oder Broadcast Control Channel (BCCH) sind aus Gründen der Vereinfachung nicht gezeigt.

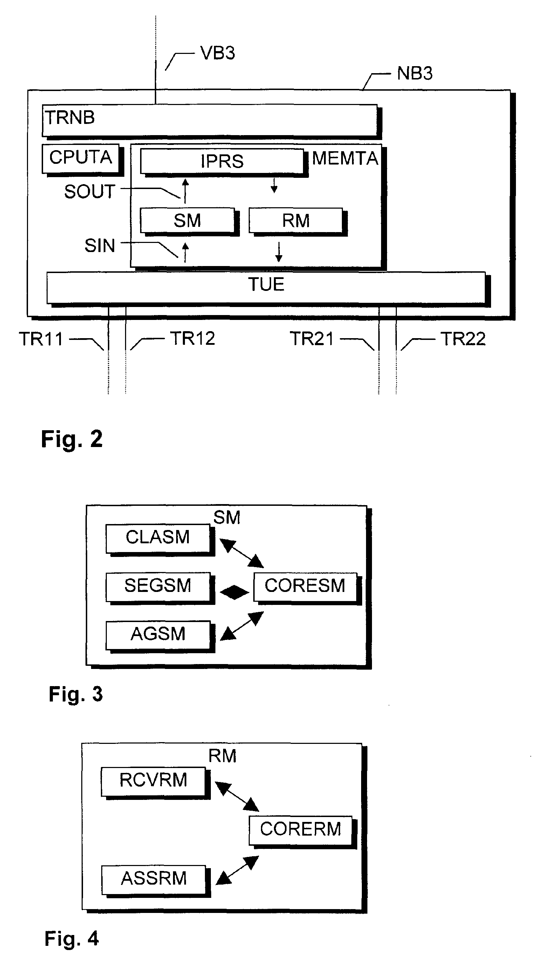

Von der Zugangseinrichtung NB3 sind beispielhaft einige wesentliche Komponenten gezeigt, nämlich Verbindungsmittel TRNB und TUE sowie ein Steuermittel CPUTA und ein Speichermittel MEMTA. Mit dem Verbindungsmittel TUE kann die Zugangseinrichtung NB3 die Daten- und Sprachverbindungen VE1 und VE2 zu den Endgeräten UE1 bzw. UE2 aufbauen. Mit dem Verbindungsmittel TUE kann die Zugangseinrichtung NB3 die Verbindung VB3 aufbauen. Bei dem Steuermittel CPUTA handelt es sich um einen Prozessor oder um eine Gruppe von Prozessoren, die Programmcode von Programm-Modulen, beispielsweise von einem Vorbereitungsmodul SM und einem Empfangsmodul RM, ausführen können, die in dem Speichermittel MEMTA gespeichert sind. Das Steuermittel CPUTA steuert mit Hilfe der Programm-Module unter Kontrolle eines Betriebssystems die Funktionen der Zugangseinrichtung NB3 und nimmt dabei beispielsweise auf die Funktionen des Verbindungsmittels TRNB Einfluss. Die Verbindungsmittel TRNB und TUE, das Steuermittel CPUTA und das Speichermittel MEMTA sind durch in Figur 2 nicht dargestellte Verbindungen untereinander verbunden. Weiterhin kann die Zugangseinrichtung NB3 weitere Baugruppen aufweisen, z.B. ein Koppelnetzwerk oder eine Schnittstelle zu einem Network Management System OMC, das ebenfalls an das Netzwerk IPNET angeschlossen ist. Die Zugangseinrichtung NB3 bedient außer den Endgeräten UE1 und UE2 auch weitere, nicht dargestellte Endgeräte.

Die erfindungsgemäßen Funktionen der Zugangseinrichtung NB3 werden vorliegend im Wesentlichen durch das Vorbereitungsmodul SM und das Empfangsmodul RM in Zusammenwirkung mit einem Modul IPRS zum Senden und Empfangen von Internet-Protokoll-Datagrammen erbracht. Es versteht sich, dass die Module RM und SM jeweils auch in Hardware realisiert werden können und dabei beispielsweise separate Einsteckmodule oder auf dem Verbindungsmittel TRNB angeordnete integrierte Schaltkreise sind.

Die Module RM und SM weisen vorliegend jeweils Programmcode auf, der durch das Steuermittel CPUTA ausgeführt wird. Die Module RM und SM sind z.B. in einer Programmiersprache, beispielsweise "C", "C++", Java oder dergleichen, erstellt und werden anschließend durch einen Kompiler oder einen Interpreter in Programmcode übersetzt, der durch das Steuermittel CPUTA ausgeführt werden kann. Die Module RM und SM sind lediglich schematisch aus funktionaler Sicht dargestellt und können jeweils auch individuell anders ausgebaut sein. Von dem Vorbereitungsmodul SM ist ein zentraler Steuerteil CORESM gezeigt, der eine als Klassifizierungsmittel dienende Klassifizierungsfunktion CLASM, eine als Verpackungsmittel dienende Packfunktion SEGSM sowie eine als Aggregationsmittel dienende Aggregationsfunktion AGSM steuert. Die Klassifizierungsfunktion CLASM, die Packfunktion SEGSM und die Aggregationsfunktion AGSM könnten jedoch zueinander auch unmittelbare Schnittstellen aufweisen und ohne Steuerung des Steuerteils CORESM interagieren. Ähnlich können in dem Empfangsmodul RM eine als Empfangsmittel dienende Empfangsfunktion RCVRM und eine als Rekonstruktionsmittel dienende Rekonstruktionsfunktion ASSRM direkt zusammenwirken oder unter Steuerung eines Steuerteils CORERM.

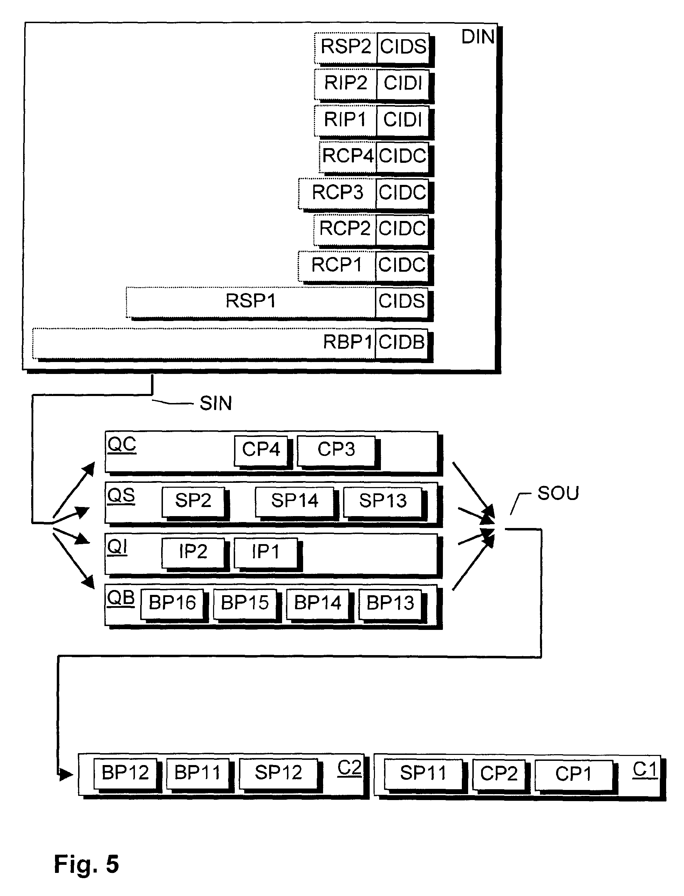

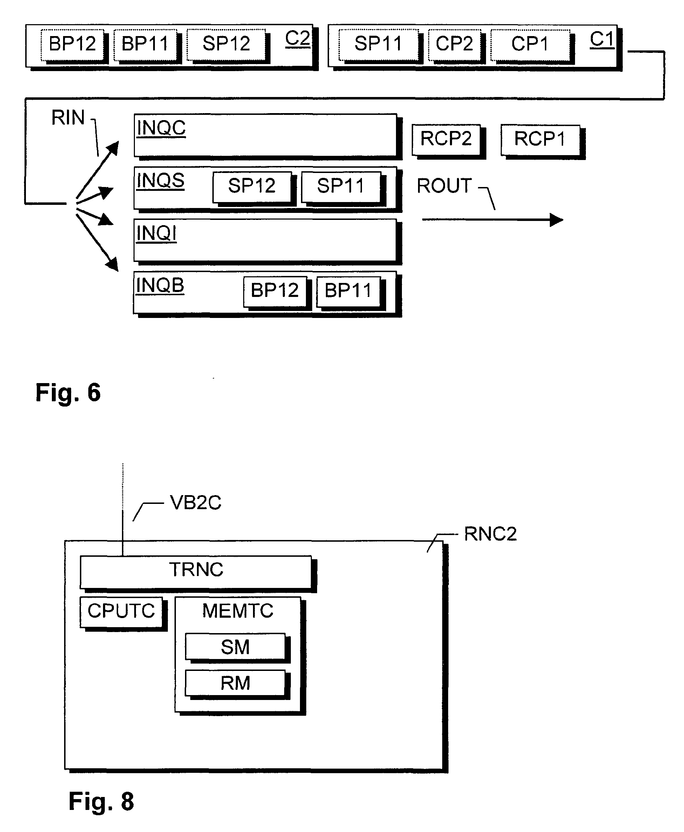

Im Folgenden wird die erfindungsgemäße Bearbeitung von zu übertragenden Daten durch die Module RM und SM anhand der Figuren 5 und 6 veranschaulicht.

Die Zugangseinrichtung NB3 empfängt auf den Transportkanälen TR11 Eingangs-Daten DIN, von denen eine Folge von Daten RBP1, RSP1, RCP1, RCP2, RCP3, RCP4, RIP1, RIP2 und RSP2 gezeigt ist. Diese Daten RBP1 bis RSP2 werden in sogenannten Frame Protokoll Protocol Data Units (FP PDUs) transportiert. Definitionen für derartige Frame Protokolle sind beispielsweise den 3GPP-Spezifikationen zu entnehmen.

Das Verbindungsmittel TUE leitet die Daten RBP1 bis RSP2 an die Klassifizierungsfunktion CLASM weiter, was in der Figur durch einen Pfeil SIN veranschaulicht ist. Die Klassifizierungsfunktion CLASM reiht die Daten RBP1 bis RSP2 entsprechend ihrer jeweiligen Dienstqualität in Warteschlangen QC, QS, QI und QB ein, die der jeweiligen Dienstqualität Conversational, Streaming, Interactive bzw. Background der Daten RBP1 bis RSP2 zugeordnet sind. Dabei sind die Dienstqualität Conversational beispielsweise Gesprächsdaten zugeordnet und die Dienstqualität Streaming z.B. Musik- oder Videodaten. Die Dienstqualität Interactive betrifft beispielsweise beim Surfen im Internet erforderliche, interaktiv auszutauschende Daten und die Dienstqualität Background beim das Up- oder Downloaden von Dateien zu übertragende Daten. Weitere Dienstqualitäten sind ohne Weiteres möglich. Ferner können z.B. auch nur lediglich zwei Dienstqualitäten vorgesehen sein.

Die Klassifizierungsfunktion CLASM ermittelt die jeweilige Dienstqualität der Daten RBP1 bis RSP2 vorliegend anhand von den Daten RBP1 bis RSP2 beigefügten Kanal-Identifizierern CIDC, CIDS, CIDI und CIDB, die den Dienstqualitäten Conversational, Streaming, Interactive bzw. Background zugeordnet sind. Beispielsweise betrifft der "Interactive"-Kanal-ldentifizierer CIDI einen DCH-Daten-Kanal, der dem Endgerät UE1 zum Surfen im Internet dient, während der Conversational-Kanal-Identifizierer CIDC z.B. einen sogenannten Coordinated-Channel bezeichnet, der drei DCH-Daten-Kanäle für Gesprächsdaten umfasst. Vorliegend enthalten die Kanal-Identifizierer CIDC, CIDS, CIDI und CIDB auch eine Information, dass ihre jeweiligen Daten dem Endgerät UE1 und nicht dem Endgerät UE2 zugeordnet sind.

Es ist jedoch auch möglich, dass keine Kanal-Identifizierer CIDC, CIDS, CIDI und CIDB vorgesehen sind. In einem solchen Fall kann beispielsweise das Verbindungsmittel die Daten RBP1 bis RSP2 direkt in die Warteschlangen QC, QS, QI und QB oder diesen vorgeschalteten Warteschlangen einschreiben.

Die Packfunktion SEGSM verpackt die Daten RBP1, RSP1, RCP1, RCP2, RCP3, RCP4, RIP1, RIP2 und RSP2 in Datenpakete BP11 bis BP16, SP11 bis SP14, CP1, CP2, CP3, CP4, IP1, IP2 bzw. SP2. Dabei segmentiert die Packfunktion SEGSM die Daten RBP1 bis RSP2 zumindest teilweise jeweils in Abhängigkeit von zumindest einer der jeweiligen Dienstqualität zugeordneten Segmentierungsregel. Die Daten RCP1, RCP2, RCP3 und RCP4 sind vorliegend Gesprächsdaten mit relativ kleine Datenmengen und werden daher unsegmentiert zu Datenpaketen CP1, CP2, CP3 und CP4 umgeformt. Wenn grundsätzlich in der Dienstqualität Conversational nur kleine Datenmengen zu erwarten sind, kann für diese Dienstqualität gegebenenfalls auf eine Segmentierungsregel verzichtet werden. Die Segmentierungsregel für die Dienstqualität Streaming schreibt z.B. eine maximale Datenpaket-Größe vor, die von den Daten RSP2 unterschritten wird, so dass auch diese unsegmentiert zu einem Datenpaket SP2 umgeformt werden. Die verhältnismäßig umfangreichen Daten SP1 hingegen werden auf Datenpakete SP11, SP12, SP13 und SP14 aufgeteilt. Die Daten RIP1, RIP2 unterschreiten die für die Dienstqualität Interactive vorgesehene Segmentgröße und werden daher unsegmentiert in Datenpakete IP1, IP2 umgeformt. Dagegen sind die Daten RBP1 sehr umfangreich und werden in verhältnismäßig kleine Datenpakete BP11 bis BP16 segmentiert und umgeformt.

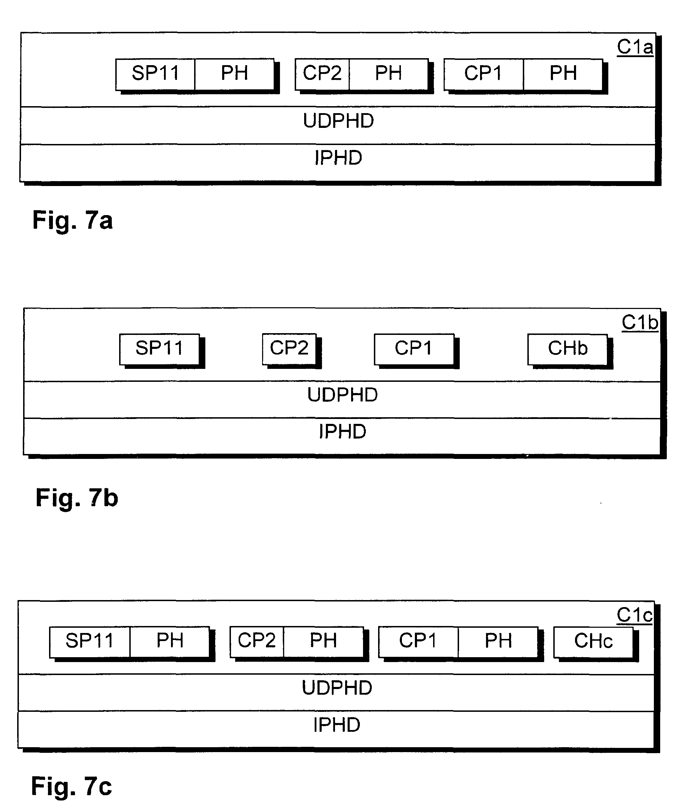

Ferner ordnet die Packfunktion SEGSM jedem Datenpaket BP11 bis BP16, SP11 bis SP14, CP1, CP2, CP3, CP4, IP1, IP2 und SP2 Datenpaket-Steuerinformationen zu, die in den Figuren 7a und 7b als Paket-Header PH sowie als Container-Header CHb und CHc dargestellt sind. Anhand der Steuerinformationen können die in den Datenpaketen Daten rekonstruiert werden. Ein Paket-Header PH enthält beispielsweise den jeweiligen Kanal-Identifizierer CIDC, CIDS, CIDI und CIDB oder, in einer bevorzugten Variante der Erfindung, lediglich einen Teil davon, beispielsweise die jeweils niedrigstwertigen Bits. Ferner ist in den Steuerinformationen eine Information über die Größe des jeweiligen Datenpaketes enthalten. Zur Rekonstruktion segmentierter Daten enthält die Steuerinformation eine Sequenznummer des jeweiligen Datenpaketes sowie ein Flag, ob das jeweilige Datenpaket das letzte Datenpaket einer Datenpaket-Sequenz ist oder ob noch Datenpakete folgen.

Die Figuren 7a bis 7c zeigen mögliche Ausführungsformen C1a, C1b, C1c des Containers C1. In den Containern C1a und C1c ist jedem Datenpaket CP1, CP2, SP11 eine Steuerinformation als Paket-Header PH zugeordnet. Hingegen weist der Container C1b lediglich einen Container-Header CHb auf, der beispielsweise alle zur Rekonstruktion der in den Datenpaketen CP1, CP2, SP11 enthaltenen Daten notwendigen Steuerinformationen umfasst. Der Container C1c weist neben den Paket-Headern PH zusätzlich einen Container-Header CHc mit Steuerinformationen auf, der beispielsweise eine Information über die Anzahl und/oder die Gesamt-Datenmenge der im Container C1c enthaltenen Datenpakete CP1, CP2, SP11 enthält. Grundsätzlich können die Steuerinformationen sowohl nur in Paket-Headern als auch nur in Container-Headern oder in beiden Header-Arten je nach Anwendung vorgesehen sein.

Zur besseren Veranschaulichung wird die Packfunktion SEGSM vorliegend erst nach Einschreiben der Daten RBP1 bis RSP2 in die Warteschlangen QC, QS, QI und QB tätig. In einer bevorzugten Variante wird jedoch zunächst die Packfunktion SEGSM aktiv, so dass bereits segmentierten Daten oder Datenpakete und die zugehörigen Steuerinformationen in die Warteschlangen QC, QS, QI und QB eingetragen werden. Die Klassifizierungsfunktion CLASM kann auch in die Packfunktion SEGSM integriert sein.

Die Aggregationsfunktion AGSM entnimmt in Abhängigkeit von zumindest einer Aggregationsregel Datenpakete unterschiedlicher Dienstqualität aus den jeweiligen Warteschlangen QC, QS, QI und QB und bildet Container, was durch einen Pfeil SOUT angedeutet ist. Beispielhaft sind Container C1 und C2 mit Datenpaketen CP1, CP2, SP11 bzw. SP12, BP11, BP12 gezeigt. Die Warteschlangen QC, QS, QI und QB werden dabei nach einem ihnen zugeordneten Prioritätsschema gemäß der mindestens einen Aggregationsregel behandelt. Vorliegend werden die Warteschlangen QC, QS, QI und QB in absteigender Prioritätsreihenfolge bedient, so dass beispielsweise Datenpakete aus der Warteschlange QC stets bevorzugt behandelt werden, während Datenpakete aus der Warteschlange QB nur dann entnommen werden, wenn sonst keine Datenpakete zum Versand anstehen. Daher sind in den Container C1 zunächst die Datenpakete CP1 und CP2 aus der Warteschlange QC gepackt. Der noch verbleibende Platz bis zu der für den Container C1 vorbestimmten Nutzlast-Menge wird durch das Datenpaket SP11 genutzt. Die jeweils vorbestimmte Nutzlast-Menge kann durch die mindestens eine Aggregationsregel fest oder innerhalb vorgegebener Grenzen variabel definiert werden. Da vorliegend zum Zeitpunkt des Packens des Containers C2 keine weiteren Datenpakete in der Warteschlange QC vorhanden sind, packt die Aggregationsfunktion AGSM das Datenpaket SP12 in den sich an den Container C1 anschließenden Container C2. Dieser wird mit Datenpaketen BP11 und BP12 bis zu seiner vorbestimmten Nutzlast-Menge aufgefüllt, beispielsweise weil der neben dem Datenpaket SP12 verbleibende Raum für das Datenpaket S13 zu gering ist oder weil die mindestens eine Aggregationsregel vorschreibt, dass in vorbestimmten Zeitintervallen die Warteschlangen QI und QB in jedem Fall zu bedienen sind. Es dabei beispielsweise möglich, dass die Priorität einer Warteschlange steigt, wenn sie über einen vorbestimmten Zeitraum nicht bedient wurde oder wenn sie überzulaufen droht. Geeignete Prioritätsverfahren können jedenfalls in der Aggregationsregel definiert werden.

Anschließend stellt die Aggregationsfunktion AGSM die Container C1 und C2 zur Übertragung durch eine als Sendevorrichtung dienende Sendefunktion IPRS bereit. Die Sendefunktion IPRS fügt dem jeweiligen Container einen User-Datagram-Protokoll-Header UDPHD sowie eine Internet-Protokoll-Header IPHD voran und übergibt die jeweiligen Internet-Protokoll-Datagramme dem Verbindungsmittel TRNB zum Versand an den Konzentrationsknoten RNC2. Die Sendefunktion IPRS kann in das Vorbereitungsmodul SM integriert sein.

Der Konzentrationsknoten RNC2 weist in Bezug auf die erfindungsgemäßen Funktionen grundsätzlich einen ähnlichen Aufbau wie die Zugangseinrichtung NB3 auf, und ist daher mit einem dem Steuermittel CPUTA entsprechenden Steuermittel CPUTC, den Speichermitteln CPUTA entsprechenden Speichermitteln CPUTC sowie den Verbindungsmitteln TRNB entsprechenden Verbindungsmitteln TRNC ausgestattet. Ferner sind die Module RM und SM, gegebenenfalls in auf den Konzentrationsknoten RNC2 angepasster Ausführungsform, in den Speichermitteln CPUTC gespeichert. Deren jeweiliger Programmcode wird durch das Steuermittel CPUTC ausgeführt. Weitere Baugruppen des Konzentrationsknotens RNC2 sowie dessen interne Verbindungen sind aus Gründen der Vereinfachung nicht gezeigt.

Der Konzentrationsknoten RNC2 empfängt die Internet-Protokoll-Datagramme mit den Containern C1 und C2 über die Verbindungsmittel TRNC. Diese geben die vollständigen Internet-Protokoll-Datagramme, vorzugsweise jedoch nur die darin enthaltenen Container C1 und C2 an die Empfangsfunktion RCVRM weiter. Die Empfangsfunktion RCVRM ist im ersten Fall zum Empfangen der vollständigen Internet-Protokoll-Datagramme ausgestaltet.

Die Rekonstruktionsfunktion ASSRM entnimmt die Datenpakete CP1, CP2, SP11 und SP12, BP11, BP12 aus den Containern C1 bzw. C2 und reiht sie, angedeutet durch einen Pfeil RIN, in Aufbereitungs-Warteschlangen INQC, INQS, INQI und INQB ein, die der den bekannten Dienstqualitäten Conversational, Streaming, Interactive bzw. Background zugeordnet sind. Dabei werden die gegebenenfalls vorhandenen Steuerinformationen PH und/oder CHb, CHc von den Datenpaketen entfernt. Die Datenpakete CP1, CP2 enthalten unsegmentierte Daten RCP1, RCP2, die von der Rekonstruktionsfunktion ASSRM unmittelbar an das jeweils vorgesehene Ziel weitergeleitet werden. Sie werden von dem Konzentrationsknoten RNC2 über das Mobilfunk-Netzwerk MNET beispielsweise an ein an die Zugangseinrichtung NB1 angeschlossenes, nicht dargestelltes Endgerät weitergeleitet, was durch einen Pfeil ROUT angedeutet ist.

Anhand der Steuerinformationen PH und/oder CHb, CHc ermittelt die Rekonstruktionsfunktion ASSRM, dass die Datenpakete SP11 und SP12, BP11, BP12 jeweils Datenpakete einer Datenpaket-Sequenz sind und noch vervollständigt werden müssen. Die Rekonstruktionsfunktion ASSRM speichert daher die Datenpakete SP11 und SP12 in der Warteschlange INQS und die Datenpakete BP11, BP12 in der Warteschlange INQB bis die jeweils letzten Datenpakete SP14 bzw. BP16 eingetroffen sind. Erst dann leitet die Rekonstruktionsfunktion ASSRM die jeweiligen Daten RSP1 bzw. RBP1 das jeweils vorgesehene Ziel weiter. Dabei wird in den Steuerinformationen PH und/oder CHb, CHc enthaltene Ziel-Adressinformation ausgewertet. Je nach deren jeweiliger Ziel-Adressinformation kann die Rekonstruktionsfunktion ASSRM die Daten beispielsweise in den Zielen zugeordnete Speicherbereiche einschreiben. Ferner kann die Rekonstruktionsfunktion ASSRM aus den Steuerinformationen PH und/oder CHb, CHc gegebenenfalls auch die Kanal-Identifizierer CIDC, CIDS, CIDI und CIDB oder einen Teil davon regenerieren und den Daten jeweils wieder zuordnen.

Die Empfangsfunktion RCVRM und die Rekonstruktionsfunktion ASSRM können zu einer gemeinsamen Funktion zusammengefasst sein.

Auf die dargestellte Weise kann auch der Konzentrationsknoten RNC2 Daten an die Zugangseinrichtung NB3 senden. Ferner kommunizieren auch die Zugangseinrichtungen NB1 und NB2 mit dem Konzentrationsknoten RNC1 auf diese Weise. Wenn das Endgerät UE1 beispielsweise in den Funkbereich der Zugangseinrichtung NB2 weiterbewegt wird, leitet der Konzentrationsknoten RNC2 die an das Endgerät UE2 zu sendenden Daten über die Verbindung VRR an den Konzentrationsknoten RNC1 auf die erfindungsgemäße Weise weiter. Dieser sendet die jeweiligen Daten dann an die Zugangseinrichtung NB2.

Ferner ist es prinzipiell möglich, dass nur in einer Richtung auf die erfindungsgemäße Weise kommuniziert wird, wobei beispielsweise der Konzentrationsknoten RNC2 nur mit einem Vorbereitungsmodul SM, die Zugangseinrichtung NB3 nur mit einem Empfangsmodul RM ausgestattet ist.

In einer bevorzugten Variante der Erfindung, die an sich schon sogar eine eigenständige Erfindung ist, ist jedem Transportkanaltyp, beispielsweise DCH, RACH oder FACH eine UDP-Portnummer zugeordnet. Diese wird in den User-Datagram-Protokoll-Header UDPHD eingetragen. Ferner ist der Zugangseinrichtung NB3 eine Internet-Protokoll-Adresse (IP-Adresse) zugewiesen, die in den Internet-Protokoll-Header IPHD eingetragen wird. IP-Adresse und UDP-Portnummer werden daher vorteilhaft in das zur Adressierung eines jeweiligen Kanales notwendige Adressierungsschema einbezogen. Beispielweise können IP-Adresse und UDP-Portnummer den Kanal-Identifizierern CIDC, CIDS, CIDI und CIDB zugeordnet werden, beispielsweise als höherwertige Bits oder als zusätzliche Information beim Mappen der Kanal-Identifizierer CIDC, CIDS, CIDI und CIDB auf ein zwischen Zugangseinrichtung NB3 und Endgerät UE1 verwendetes Funkkanal-Adressierungsschema. Dadurch entsteht ein großer Adressraum, wobei die in den Containern jeweils enthaltende Adressierungsinformation kompakt ist. Insgesamt enthalten die Internet-Protokoll-Datagramme dadurch relativ wenig Steuerinformationen. Die Packfunktion SEGSM kann in der vorliegenden Variante der Erfindung mit Mitteln ausgestattet sein, um die IP-Adresse und UDP-Portnummer aus den jeweiligen Kanal-Identifizierern CIDC, CIDS, CIDI und CIDB zu entfernen. Die Empfangsfunktion RCVRM und/oder die Rekonstruktionsfunktion ASSRM weisen entsprechende Mittel auf, um die Kanal-Identifizierer CIDC, CIDS, CIDI und CIDB jeweils um IP-Adresse und UDP-Portnummer zu ergänzen.

Grundsätzlich können Daten der Transportkanäle TR11, TR12 sowie TR21, TR22 beliebig gemeinsam in einem Container transportiert werden. Ordnet man jedoch eine UDP-Portnummer jeweils einem Transportkanaltyp zu, werden beispielsweise einerseits Daten der DCH-Transportkanäle TR11 und TR21 und andererseits Daten der RACH Transportkanäle TR12 und TR22 jeweils in Containern gebündelt.

Es versteht sich, dass die vorliegende Erfindung nicht nur in Zugangsnetzen, insbesondere nicht nur in Mobilfunk-Zugangsnetzen anwendbar ist, sondern grundsätzlich bei Datenverkehr auf der Grundlage des Internet-Protokolls. Es ist sogar möglich, dass, wie anhand des Netzwerks IPNET dargestellt, einerseits auf der Internet-Protokoll-Netzwerkebene verschiedene Dienstqualitäten bereitzustellen, und andererseits durch das erfindungsgemäße Verfahren auf der Anwendungsebene des Internet-Protokolls eine weitere Skalierung des Dienstqualitäten zu erzielen.

## Patentansprüche

1. Verfahren zur Übertragung von Daten (RBP1 bis RSP2) unterschiedlicher Dienstqualität in Internet-Protokoll-Datagrammen, **dadurch gekennzeichnet,**
- **dass** die Daten (RBP1 bis RSP2) entsprechend ihrer jeweiligen Dienstqualität klassifiziert in Warteschlangen (QC, QS, QI, QB) eingereiht werden, die der jeweiligen Dienstqualität zugeordnet sind,
- **dass** die Daten (RBP1 bis RSP2) in Datenpakete (RBP11, CP1,.., SP14) verpackt werden, wobei die Daten (RBP1 bis RSP2) zumindest teilweise jeweils in Abhängigkeit von zumindest einer der jeweiligen Dienstqualität zugeordneten Segmentierungsregel segmentiert werden und wobei jedem Datenpaket (RBP11, CP1,..., SP14) eine Datenpaket-Steuerinformation (PH, CHb, CHc) zugeordnet wird, anhand derer in einzelnen Datenpaketen (CP1, CP2) oder in Datenpaketen (RBP11... RBP16; SP11... SP14) einer Datenpaket-Sequenz enthaltene Daten (RBP1, RSP1) rekonstruiert werden können,
- **dass** in Abhängigkeit von zumindest einer Aggregationsregel Container (C1, C2) einer vorbestimmten Nutzlast-Menge mit Datenpaketen (RBP11, CP1,..., SP14) und deren jeweils zugeordneter Datenpaket-Steuerinformation (PH, CHb, CHc) gebildet werden, wobei in zumindest einem Teil der Container (C1, C2) pro Container Datenpakete (RBP11, CP1,..., SP14) mit Daten (RBP1 bis RSP2) unterschiedlicher Dienstqualität kombiniert werden und wobei die mindestens eine Aggregationsregel vorschreibt, nach welcher Prioritätsregel Datenpakete (RBP11, CP1,..., SP14) unterschiedlicher Dienstqualität aus den jeweiligen Warteschlangen (QC, QS, QI, QB) entnommen werden, und
- **dass** jeweils ein Container (C1, C2) zur Übertragung in jeweils einem Internet-Protokoll-Datagramm bereitgestellt wird.

2. Verfahren nach Anspruch 1, **dadurch gekennzeichnet, dass** in die Internet-Protokoll-Datagramme auf die Internet-Protokoll-Schicht (IPHD) eine User-Datagram-Protokoll-Schicht (UDPHD) eingetragen wird.

3. Verfahren nach Anspruch 2, **dadurch gekennzeichnet, dass** der jeweilige Container (C1, C2) in einem Internet-Protokoll-Datagramm als Nutzlast des User-Datagram-Protokolls (UDPHD) eingetragen wird.

4. Verfahren nach Anspruch 1, **dadurch gekennzeichnet, dass** ein Container, der zumindest ein Datenpaket (RBP11, CP1,..., SP14) enthält, bei Erreichen einer vorbestimmten Zeitgrenze versendet wird, auch wenn der jeweilige Container (C1, C2) noch nicht bis zu seiner vorbestimmten Nutzlast-Menge mit Datenpaketen (RBP11, CP1,..., SP14) gefüllt ist.

5. Verfahren nach Anspruch 1, **dadurch gekennzeichnet, dass** vorzugsweise Daten niedriger Dienstqualität (RBP1 bis RSP2) segmentiert werden.

6. Verfahren nach Anspruch 1, **dadurch gekennzeichnet, dass** die in den Datenpaketen (RBP11, CP1,..., SP14) solche Daten (RBP1 bis RSP2) übertragen werden, die zwischen Übertragungseinrichtungen (NB1, NB2, NB3, RNC1, RNC2) eines Zugangsnetzes, insbesondere eines Mobilfunk-Zugangsnetzes (ACCNET), übertragene oder zu übertragende Informationen betreffen, insbesondere auf Transportkanälen (TR11, TR12, TR21, TR22) zu Mobilfunk-Endgeräten (UE1, UE2) übertragene oder zu übertragende Informationen.

7. Verfahren nach den Ansprüchen 2 und 6, **dadurch gekennzeichnet, dass** die in einem Internet-Protokoll-Datagramm verwendete Internet-Protokoll-Adresse sowie der in dem Internet-Protokoll-Datagramm angegebene User-Datagram-Port zur Identifizierung eines Transportkanals (TR11, TR12, TR21, TR22) des Mobilfunk-Zugangsnetzes (ACCNET) und/oder zur Identifizierung des Typs des Transportkanals (TR11, TR12, TR21, TR22) verwendet werden.

8. Verfahren nach Anspruch 6 oder 7, **dadurch gekennzeichnet, dass** in der einem Datenpaket (RBP11, CP1,..., SP14) jeweils zugeordneten Steuerinformation (PH, CHb, CHc) zumindest ein Anteil eines Identifizierers (CIDC, CIDS, CIDI, CIDB) zur Identifizierung eines Transportkanals und/oder dessen Transportkanaltyps des Mobilfunk-Zugangsnetzes (ACCNET) eingetragen wird.

9. Verfahren nach Anspruch 1, **dadurch gekennzeichnet,**
- **dass** die Internet-Protokoll-Datagramme von einer Sende-Übertragungseinrichtung (NB3, TRNB) zu einer Empfangs-Übertragungseinrichtung (TRNC, RNC2) übertragen werden, und
- **dass** Rekonstruktionsmittel (RM) die jeweils in den Containern der Internet-Protokoll-Datagramme enthaltenen Datenpakete (RBP11, CP1,..., SP14) entnimmt und die darin enthaltenden Daten (RBP1 bis RSP2) entsprechend ihrer jeweiligen Dienstqualität an das für die jeweiligen Daten (RBP1 bis RSP2) vorgesehene Ziel weiterleiten, wobei die Rekonstruktionsmittel (RM) in einer Datenpaket-Sequenz (RBP11... RBP16; SP11... SP14) übertragene Daten (RBP1 bis RSP2) erst dann weiterleiten, wenn sie die Daten (RBP1 bis RSP2) anhand der den jeweiligen Datenpaketen (RBP11, CP1,..., SP14) jeweils zugeordneten Datenpaket-Steuerinformation (PH, CHb, CHc) rekonstruiert haben.

10. Vorbereitungsmodul für eine Übertragungseinrichtung (NB3, RNC2), insbesondere für eine Übertragungseinrichtung (NB3, RNC2) eines Mobilfunk-Zugangsnetzes (ACCNET), zur Übertragung von Daten (RBP1 bis RSP2) unterschiedlicher Dienstqualität in Internet-Protokoll-Datagrammen, **dadurch gekennzeichnet,**
- **dass** das Vorbereitungsmodul (SM) Klassifizierungsmittel (CLASM) zur Einreihung der Daten (RBP1 bis RSP2) entsprechend ihrer jeweiligen Dienstqualität in Warteschlangen (QC, QS, QI, QB), die der jeweiligen Dienstqualität zugeordnet sind,
- **dass** das Vorbereitungsmodul (SM) Verpackungsmittel (SEGSM) zur Verpackung der Daten (RBP1 bis RSP2) in Datenpakete (RBP11, CP1,..., SP14) aufweist, wobei die Verpackungsmittel (SEGSM) die Daten (RBP1 bis RSP2) zumindest teilweise jeweils in Abhängigkeit von zumindest einer der jeweiligen Dienstqualität zugeordneten Segmentierungsregel segmentiert und jedem Datenpaket (RBP11, CP1,..., SP14) eine Datenpaket-Steuerinformation (PH, CHb, CHc) zuordnet, anhand derer in einzelnen Datenpaketen (CP1, CP2) oder in Datenpaketen (RBP11... RBP16; SP11... SP14) einer Datenpaket-Sequenz enthaltene Daten (RBP1, RSP1) rekonstruiert werden können,
- **dass** das Vorbereitungsmodul (SM) Aggregationsmittel (AGSM) zur Bildung von Containern einer vorbestimmten Nutzlast-Menge mit Datenpaketen (RBP11, CP1,..., SP14) und deren jeweils zugeordneter Datenpaket-Steuerinformation (PH, CHb, CHc) in Abhängigkeit von zumindest einer Aggregationsregel aufweist, wobei in zumindest einem Teil der Container (C1, C2) pro Container Datenpakete (RBP11, CP1,..., SP14) mit Daten (RBP1 bis RSP2) unterschiedlicher Dienstqualität kombiniert werden und wobei die mindestens eine Aggregationsregel vorschreibt, nach welcher Prioritätsregel Datenpakete (RBP11, CP1,..., SP14) unterschiedlicher Dienstqualität aus den jeweiligen Warteschlangen (QC, QS, QI, QB) entnommen werden, und
- **dass** die Aggregationsmittel (AGSM) zur Bereitstellung der Container (C1, C2) zur Übertragung durch eine Sendevorrichtung (TRNB, TRNC) der Übertragungseinrichtung (NB3, RNC2) ausgestaltet sind, wobei jeweils ein Container (C1, C2) zur Übertragung in jeweils einem Internet-Protokoll-Datagramm vorgesehen ist.

11. Vorbereitungsmodul (SM) nach Anspruch 10, **dadurch gekennzeichnet, dass** es Programmcode enthält, der von einem Steuermittel (CPUTA, CPUTB) der Übertragungseinrichtung (NB3, RNC2) ausgeführt werden kann.

12. Empfangsmodul für eine Übertragungseinrichtung (NB3, RNC2), insbesondere für eine Übertragungseinrichtung (NB3, RNC2) eines Mobilfunk-Zugangsnetzes (ACCNET), zur Übertragung von Daten (RBP1 bis RSP2) unterschiedlicher Dienstqualität in Internet-Protokoll-Datagrammen, **dadurch gekennzeichnet,**
- **dass** das Empfangsmodul (RM) Empfangsmittel (RCVRM) zum Empfangen von Containern aufweist, die jeweils in Internet-Protokoll-Datagrammen zu dem Empfangsmodul (RM) übertragen werden und in denen Datenpakete (RBP11, CP1,..., SP14) und diesen jeweils zugeordnete Datenpaket-Steuerinformationen enthalten sind, wobei in zumindest einem Teil der Container (C1, C2) pro Container Datenpakete (RBP11, CP1,..., SP14) mit Daten (RBP1 bis RSP2) unterschiedlicher Dienstqualität enthalten sind,
- **dass** das Empfangsmodul (RM) Rekonstruktionsmittel (ASSRM) zur Entnahme der Datenpakete (RBP11, CP1,..., SP14) aus den Containern und zur Weiterleitung der in den jeweiligen Containern enthaltenden Daten (RBP1 bis RSP2) an das für diese jeweils vorgesehene Ziel aufweist und
- **dass** die Rekonstruktionsmittel (ASSRM) weiter derart ausgestaltet sind, dass die Rekonstruktionsmittel (ASSRM) in einer Datenpaket-Sequenz (RBP11... RBP16; SP11... SP14) übertragene Daten (RBP1, RSP1) erst dann weiterleiten, wenn die Rekonstruktionsmittel (ASSRM) die Daten (RBP1, RSP1) anhand der den jeweiligen Datenpaketen (RBP11... RBP16; SP11... SP14) jeweils zugeordneten Datenpaket-Steuerinformation (PH, CHb, CHc) rekonstruiert haben.

13. Empfangsmodul nach Anspruch 12, **dadurch gekennzeichnet, dass** es Programmcode enthält, der von einem Steuermittel (CPUTA, CPUTB) der Übertragungseinrichtung (NB3, RNC2) ausgeführt werden kann.

14. Übertragungseinrichtung (NB3, RNC2), insbesondere Übertragungseinrichtung (NB3, RNC2) für ein Mobilfunk-Zugangsnetz, mit einem Vorbereitungsmodul (SM) nach Anspruch 10 oder 11 und/oder mit einem Empfangsmodul (RM) nach Anspruch 12 oder 13.

15. Durch einen Computer lesbares Speichermittel, mit einem darauf gespeicherten Vorbereitungsmodul (SM) nach Anspruch 11 und/oder mit einem darauf gespeicherten Empfangsmodul (RM) nach Anspruch 13.
